# EUROPEAN PATENT APPLICATION

(11) **EP 3 858 694 A1**
(43) Date of publication of application: **04.08.2021**
(21) Application number: 18935229.7
(22) Date of filing: 25.09.2018
(51) Int. Cl.: B60W 30/00

(54) **VEHICLE CONTROL METHOD AND VEHICLE CONTROL DEVICE**

(71) Applicant: NISSAN MOTOR CO., LTD., Yokohama-shi, Kanagawa 221-0023 (JP)
(72) Inventor: ARITA, Hiroshi, Atsugi-shi, Kanagawa 243-0123 (JP); MORITA, Tetsunobu, Atsugi-shi, Kanagawa 243-0123 (JP); KOGURE, Yuuya, Atsugi-shi, Kanagawa 243-0123 (JP); NAKAMURA, Yusuke, Atsugi-shi, Kanagawa 243-0123 (JP); OHNO, Takeshi, Atsugi-shi, Kanagawa 243-0123 (JP); UMINO, Tomohiro, Atsugi-shi, Kanagawa 243-0123 (JP)
(74) Representative: Hoefer & Partner Patentanwälte mbB
(86) International application number: PCT/JP2018/035476
(87) International publication number: WO 2020/065729

(57) **Abstract**

A vehicle control method including: setting a target acceleration based on a distance to a preceding vehicle or an obstacle and accelerating an own vehicle based on the target acceleration without relying on a driver's operation. Then, the vehicle control method including: calculating an acceleration limit which is an acceleration at which a relative distance to the preceding vehicle or the obstacle at a time when a preset acceleration limiting time has passed from a start of the acceleration is equal to or longer than a reference relative distance and a relative vehicle speed to the preceding vehicle or the obstacle at the time when the preset acceleration limiting time has passed from the start of the acceleration is equal to or lower than a reference relative vehicle speed, and accelerating the own vehicle at the acceleration limit when the target acceleration exceeds the acceleration limit.

## Description

### TECHNICAL FIELD

The present invention relates to a vehicle control to autonomously control at least the acceleration/ deceleration of a vehicle without relying on a driver's operation.

### BACKGROUND ART

Conventionally, a vehicle control to autonomously control at least the acceleration/deceleration of a vehicle without relying on a driver's operation is known. The conventional vehicle control performs, when a preceding vehicle is detected by a camera, so-called follow-up travel of driving an own vehicle while maintaining a predetermined following distance to the preceding vehicle and, when the preceding vehicle stops, stopping the own vehicle and, when the preceding vehicle restarts, restarting the own vehicle. The camera is limited in the performance, and therefore sometimes cannot recognize a preceding vehicle in a backlight state, for example. Therefore, there is a possibility that the conventional vehicle control determines that the own vehicle may be accelerated despite the presence of a preceding vehicle. Even when it starts accelerating based on this determination, the follow-up travel can be cancelled for deceleration when a driver performs a brake operation. When there is a sufficient following distance to the preceding vehicle at a start of the deceleration, a collision with the preceding vehicle can be avoided. Thus, a technique described in JP2015-93645A suppresses the acceleration during the follow-up travel and increases the vehicle speed to a target vehicle speed at the suppressed acceleration. According to this technique, even when it starts accelerating despite the presence of a preceding vehicle, a collision with the preceding vehicle can be avoided by a brake operation performed by a driver.

### SUMMARY OF INVENTION

In recent years, however, an improvement of the acceleration has been demanded from the viewpoint of an improvement of the performance of a travel support control and an autonomous driving control including the follow-up control described above. Therefore, when the acceleration is suppressed more than necessary, the demand for the improvement of the acceleration cannot be satisfied.

Thus, it is an object of the present invention to achieve both the avoidance of a collision with a preceding vehicle or an obstacle and an improvement of the acceleration when it starts accelerating, regarding a vehicle control to autonomously control the acceleration/deceleration of a vehicle.

A vehicle control method according to an aspect of the present invention including: setting a target acceleration based on a distance to a preceding vehicle or an obstacle and accelerating an own vehicle based on the target acceleration without relying on a driver's operation. Then, the vehicle control method including: calculating an acceleration limit which is an acceleration at which a relative distance to the preceding vehicle or the obstacle at a time when a preset acceleration limiting time has passed from a start of the acceleration is equal to or longer than a reference relative distance and a relative vehicle speed to the preceding vehicle or the obstacle at the time when the preset acceleration limiting time has passed from the start of the acceleration is equal to or lower than a reference relative vehicle speed, and accelerating the own vehicle at the acceleration limit when the target acceleration exceeds the acceleration limit.

### BRIEF DESCRIPTION OF DRAWINGS

FIG. 1 is a block diagram of a vehicle control system.
FIG. 2 is a timing chart when it starts accelerating because a vehicle during follow-up travel cannot recognize a preceding vehicle.
FIG. 3 is a timing chart when it starts accelerating because a vehicle during follow-up travel cannot recognize an obstacle.
FIG. 4 is a diagram illustrating a control routine executed by a travel controller according to this embodiment.
FIG. 5 is a flow chart illustrating the contents of a routine for limiting a change rate.
FIG. 6 is a diagram illustrating the contents of a control routine in a first modification.
FIG. 7 is a diagram illustrating the contents of a control routine in a second modification.
FIG. 8 is a diagram illustrating the contents of a control routine in a third modification.
FIG. 9 is a diagram illustrating the contents of a control routine in a fourth modification.
FIG. 10 is a diagram illustrating the contents of a control routine in a fifth modification.
FIG. 11 is a diagram illustrating the contents of a control routine in a sixth modification.
FIG. 12 is a diagram illustrating the contents of a control routine in a seventh modification.
FIG. 13 is a diagram illustrating the contents of a control routine in an eighth modification.
FIG. 14 is a diagram illustrating the contents of a control routine in a ninth modification.
FIG. 15 is a diagram illustrating the contents of a control routine in a tenth modification.
FIG. 16 is a diagram illustrating the contents of a control routine in an eleventh modification.

### DESCRIPTION OF EMBODIMENTS

Hereinafter, an embodiment of the present invention is described with reference to the drawings, for example.

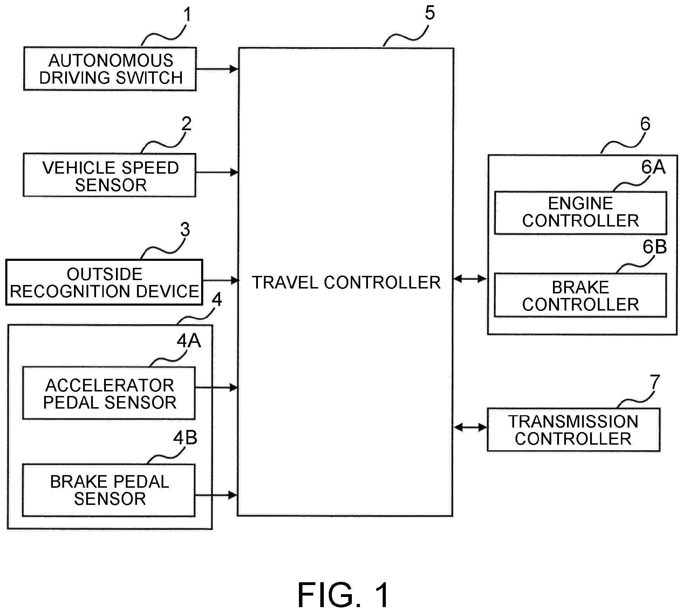

FIG. 1 is a block diagram of a vehicle control system according to this embodiment.

A vehicle according to this embodiment includes an internal combustion engine (hereinafter referred to as an "engine") as a driving source and transmits a driving force generated in the engine to a transmission through a torque converter.

An autonomous driving switch 1 is a switch for instructing a start or an end of an autonomous driving mode of autonomously performing an acceleration/deceleration control without relying on a driver's operation and instructing changes of the vehicle speed, acceleration, and the like during the execution of the autonomous driving mode. The state of the autonomous driving switch 1 is output to a travel controller 5 described later.

A vehicle speed sensor 2 is a sensor detecting the vehicle speed of an own vehicle and consists of a pulse generator, such as a rotary encoder measuring the wheel speed, for example. Wheel speed information detected by the vehicle speed sensor 2 is output to the travel controller 5 described later.

An outside recognition device 3 recognizes a preceding vehicle, a traffic light, and the like present in front of the own vehicle and detects the state of the recognized preceding vehicle or traffic light. Information on the detected preceding vehicle or traffic light is output to the travel controller 5 described later. The outside recognition device 3 consists of a radar and a camera, for example.

An accelerator pedal sensor 4A detects the operation amount of an accelerator pedal which is an operation element for instructing the acceleration operated by a driver. The detected accelerator pedal operation amount is output to the travel controller 5 described later.

A brake pedal sensor 4B detects the operation amount of a brake pedal which is an operation element for instructing the deceleration operated by the driver. The detected brake pedal operation amount is output to the travel controller 5 described later.

Herein, the accelerator pedal and the brake pedal configure driving operation elements operated by the driver. The accelerator pedal sensor 4A and the brake pedal sensor 4B are also sometimes referred to as a driving operation element working state detection unit 4.

The travel controller 5 as a travel control unit performs a travel control based on the state of the autonomous driving switch 1, the vehicle speed of the own vehicle on the basis of a signal from the vehicle speed sensor 2, information on the outside acquired by the outside recognition device 3, and the state of the driving operation element working state detection unit 4. More specifically, the travel controller 5 performs the autonomous driving when the autonomous driving switch 1 is in an ON state. When there is a preceding vehicle in front of the own vehicle in the case of performing the autonomous driving, the travel controller 5 sets a target vehicle speed for performing follow-up travel while maintaining the following distance to the preceding vehicle at a preset predetermined distance and a target acceleration/ deceleration based on the target vehicle speed. Then, the travel controller 5 calculates a target driving force or a target braking force for realizing the target acceleration/deceleration (which are hereinafter also collectively referred to as a "target acceleration/deceleration control amount"), and then outputs the calculated target acceleration/deceleration control amount to an acceleration/deceleration control device 6. When there is no preceding vehicle in the case of performing the autonomous driving, the travel controller 5 sets the legal speed, for example, as the target vehicle speed, and then sets the target acceleration according to the target vehicle speed. Then, the travel controller 5 calculates the target acceleration/ deceleration control amount for realizing the target acceleration/deceleration, and then outputs the target acceleration/deceleration control amount to the acceleration/deceleration control device 6 described later. The acceleration control during the follow-up travel in this embodiment is described later.

The travel controller 5 sets a gear shift command value based on the information above in the case of performing the autonomous driving, and then outputs the gear shift command value to a transmission controller 7.

The travel controller 5 consists of a microcomputer including a central processing unit (CPU), a read-only memory (ROM), a random-access memory (RAM), and an input/output interface (I/O interface). The travel controller 5 may contain a plurality of microcomputers.

The acceleration/deceleration control device 6 includes an engine controller 6A as a driving force control unit and a brake controller 6B. The engine controller 6A controls a throttle valve opening degree of the engine as the driving source based on the acceleration/deceleration control amount input from the travel controller 5. The brake controller 6B controls a braking force based on the acceleration/deceleration control amount input from the travel controller 5. The braking force is controlled by controlling the liquid pressure of a hydraulic brake or the amount of regenerative power obtained by a regenerative brake.

Next, the acceleration control during the follow-up travel executed by the travel controller 5 is described.

The travel controller 5 stops the own vehicle with a preset following distance for stop when a preceding vehicle stops during the follow-up travel by the autonomous driving and starts the own vehicle when the preceding vehicle starts. When the following distance to the preceding vehicle increases, the travel controller 5 accelerates the own vehicle. In the following description, the start and the acceleration are collectively referred to as the acceleration unless otherwise particularly distinguished from each other.

At this time, the camera as the outside recognition device 3 determines whether there is a preceding vehicle and whether a preceding vehicle has started. However, in a case where the performance limit is exceeded due to bad weather or the like, or in a backlight state, or the like, the camera sometimes cannot recognize a preceding vehicle. When the camera cannot recognize a preceding vehicle, there is a risk to start accelerating in a scene where it should not accelerate under normal circumstances. Even when it starts accelerating as described above, the follow-up travel is canceled when the driver recognizes a preceding vehicle and steps on the brake pedal, so that the vehicle is decelerated. However, until the vehicle actually starts the deceleration, it takes time for the driver to recognize the preceding vehicle and to step on the brake pedal after start of acceleration, and for the braking force to be generated after the brake pedal is stepped on. Hence, when a distance to the preceding vehicle is not sufficiently secured at the generation of the braking force and the relative vehicle speed to the preceding vehicle is not sufficiently lowered, there is a possibility of a collision with the preceding vehicle.

Such a situation may arise also in the absence of a preceding vehicle. For example, when performing autonomous traveling that autonomously travels to a target point, cruise control that travels while maintaining the target vehicle speed, and the like, the own vehicle may accelerate without being able to recognize an obstacle such as a person.

Thus, the travel controller 5 executes a control described below such that, even when the own vehicle accelerates because the camera cannot recognize a preceding vehicle, the collision with the preceding vehicle or the like can be avoided when the driver performs a brake operation.

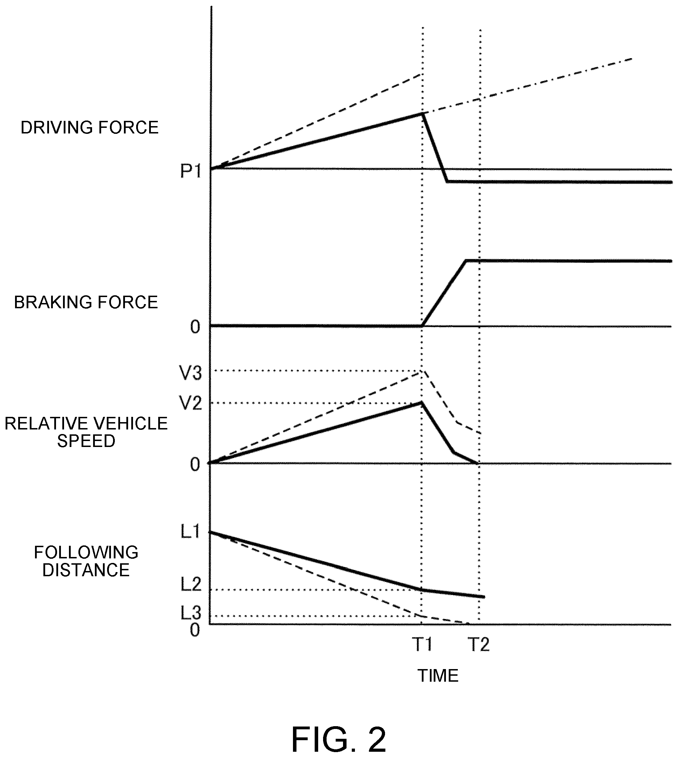

FIG. 2 is a timing chart in case where the own vehicle starts accelerating because it became impossible to recognize a preceding vehicle when traveling at a constant speed while maintaining the following distance to the preceding vehicle at L1 by the follow-up travel. The solid lines in the figure illustrate a case where the collision with the preceding vehicle can be avoided and the dashed lines illustrate a case where the collision with the preceding vehicle cannot be avoided. The driving force is an engine torque. A driving force P1 is the driving force in the state of traveling at the constant vehicle speed.

When the camera does not recognize a preceding vehicle although there is the preceding vehicle in fact at a timing zero during the follow-up travel at a constant speed, the travel controller 5 determines that the acceleration is possible, and then increases the driving force for the acceleration. By the acceleration of the own vehicle, the relative vehicle speed to the preceding vehicle begins to increase and, in accompany with it, the following distance to the preceding vehicle begins to decrease.

A driver performs the brake operation when recognizing that the own vehicle has started accelerating despite the presence of the preceding vehicle. Then, braking is started in accompany with the break operation, so that the follow-up travel is canceled. However, the braking force is actually generated at a timing (timing T1 in the figure) when a time until a driver recognizes the necessity of the brake operation to step on the brake pedal and a delay time until the braking force is generated after the brake pedal is stepped on have passed. After the timing T1, the follow-up travel is canceled and the accelerator pedal is not stepped on, and therefore the driving force is gradually lowered. Then, the braking force is generated. Thus, the relative vehicle speed and the following distance to the preceding vehicle gradually decrease. The magnitude of the braking force and the following distance during the follow-up travel are set to values used for the evaluation of the ASIL (Automotive Safety Integrity Level) as the safety standards specified in the functional safety standards ISO26262, for example. The same applies to the time required from the start of the acceleration until a driver recognizes the necessity of the brake operation to step on the brake pedal and the delay time until the braking force is generated after the brake pedal is stepped on.

Herein, at the timing T1, when the relative vehicle speed is V2 and the following distance is L2, the following distance is larger than zero at a timing T2 when the relative vehicle speed becomes zero. More specifically, the collision with the preceding vehicle can be avoided. Meanwhile, at the timing T1, when the relative vehicle speed is V3 higher than V2 and the following distance is L3 shorter than L2, the following distance becomes zero before the relative vehicle speed becomes zero. More specifically, the collision with the preceding vehicle cannot be avoided.

More specifically, it is determined by the following distance (relative distance) and the relative vehicle speed at the timing T1 whether the collision occurs. Until the timing T1, the braking force is not generated and the follow-up travel is not cancelled. Therefore, it is required to set the acceleration of the own vehicle from the start of the acceleration to the timing T1 (i.e., when accelerating in the follow-up travel) such that the following distance (relative distance) and the relative vehicle speed at the timing T1 are reduced to magnitudes at which the collision can be avoided, specifically, such that, at the timing T1, the following distance (relative distance) to the preceding vehicle is equal to or larger than the reference relative distance and the relative vehicle speed to the preceding vehicle is equal to or lower than the reference relative vehicle speed. Herein, even when the reference relative distance decreases, the collision with the preceding vehicle can be avoided by reducing the reference relative vehicle speed. The setting of the acceleration can also be referred to as the setting of the driving force in other words.

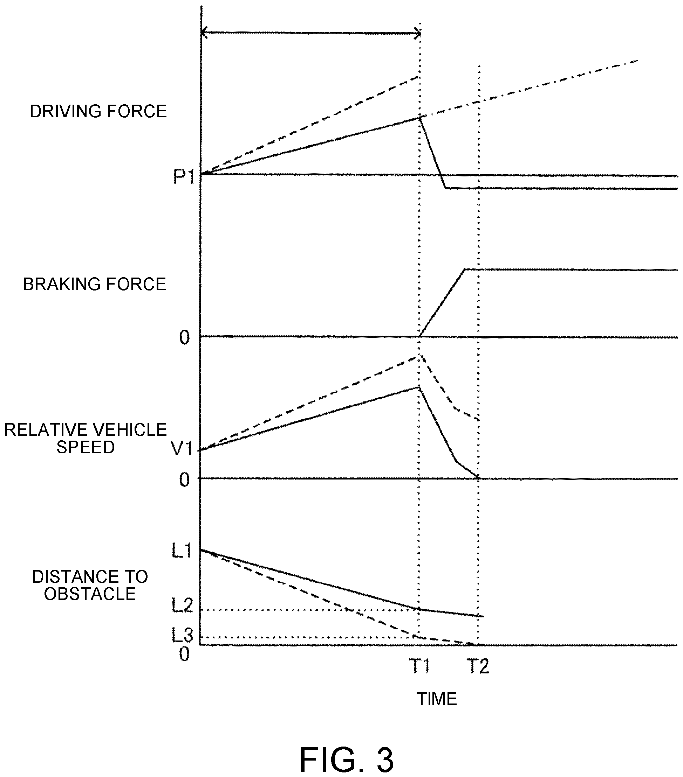

FIG. 3 is a timing chart when the own vehicle starts accelerating because the own vehicle cannot recognize an obstacle in front of the own vehicle with the camera during the autonomous driving. FIG. 3 is fundamentally the same as FIG. 2 but is different from FIG. 2 in that the relative vehicle speed at the start of the acceleration (timing zero) is V1. This is because the obstacle is not moving.

Even in this case, it is determined by the distance to the obstacle (relative distance) and the relative vehicle speed to the obstacle at the timing T1 whether a collision with the obstacle occurs as with the case of FIG. 2. More specifically, it is required to set the acceleration of the own vehicle from the start of the acceleration to the timing T1 such that the distance to the obstacle (relative distance) and the relative vehicle speed to the obstacle at the timing T1 are reduced to magnitudes at which the collision can be avoided, specifically, such that, at the timing T1, the relative distance to the obstacle is equal to or larger than the reference relative distance and the relative vehicle speed to the obstacle is equal to or lower than the reference relative vehicle speed. In the following description, a time from the start of the acceleration to the timing T1 is also referred to as an acceleration limiting time.

Next, a method for setting the acceleration that can avoid the collision is described.

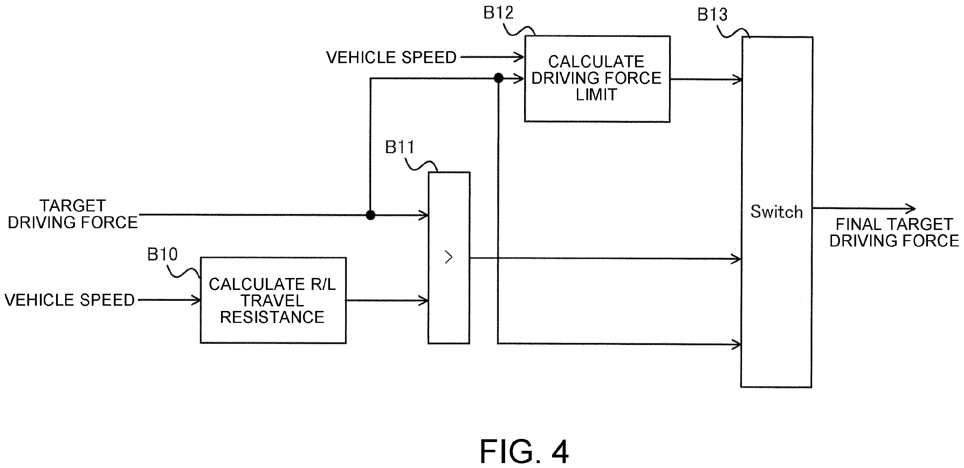

FIG. 4 is a diagram illustrating the contents of a control routine programmed in the travel controller 5. The following description describes a case where there is a preceding vehicle. The same applies also to a case where not a preceding vehicle but an obstacle is present.

The travel controller 5 reads the target driving force and the vehicle speed of the own vehicle at the start of the acceleration. The target driving force is a driving force set for accelerating the own vehicle to the target vehicle speed when the own vehicle accelerates without relying on a driver's operation as in the follow-up travel.

The travel controller 5 calculates the driving force at the start of the acceleration (which is hereinafter also sometimes referred to as an "R/L travel resistance driving force") based on the read vehicle speed of the own vehicle (B10). The R/L travel resistance driving force is a driving force required for traveling at a constant vehicle speed and is calculated by a known technique based on the weight of the own vehicle, the travel resistance, and the like.

The travel controller 5 compares the target driving force with the R/L travel resistance driving force (B11), and then determines that the own vehicle has started acceleration when the target driving force exceeds the R/L travel resistance driving force and sets a driving force limit (B12) in which a driving force variation is limited as a final target driving force and, otherwise, sets the target driving force as the final target driving force as it is (B13).

Herein, specific contents of the driving force limit are described.

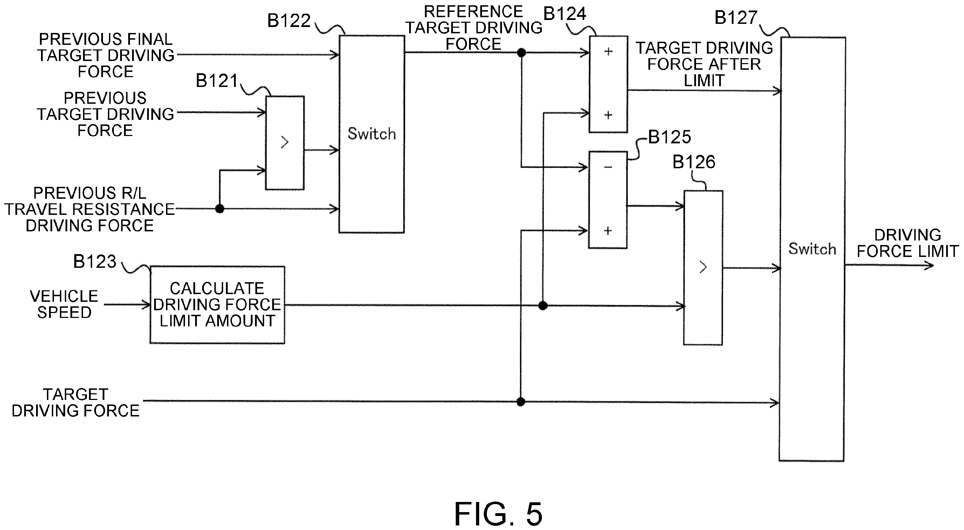

FIG. 5 is a diagram illustrating the contents of a routine for calculating the driving force limit. This routine is also programmed in the travel controller 5.

The travel controller 5 reads the target driving force, the vehicle speed of the own vehicle at the start of the acceleration, and the target driving force and the R/L travel resistance driving force calculated in the previous routine. The travel controller 5 compares the target driving force with the R/L travel resistance driving force calculated in the previous routine (B121). The travel controller 5 sets the final target driving force in the previous routine as the reference target driving force when the target driving force in the previous routine exceeds the R/L travel resistance driving force in the previous routine and, otherwise, sets the R/L travel resistance driving force in the previous routine as the reference target driving force (B122). This is because, when the target driving force does not exceed the R/L travel resistance driving force in the previous routine but the target driving force exceeds the R/L travel resistance driving force in the current routine, the driving force limit is calculated based on the R/L travel resistance driving force in the previous routine.

Next, the travel controller 5 calculates the driving force limit amount based on the read vehicle speed of the own vehicle (B123). The driving force limit amount is a driving force at which, during the follow-up travel in which a predetermined following distance to the preceding vehicle is maintained, a distance to the preceding vehicle at a time when an acceleration limiting time has passed from the start of the acceleration is such a distance that, when the braking force is generated from the time when the acceleration limiting time has passed, the relative vehicle speed to the preceding vehicle becomes zero before the distance to the preceding vehicle becomes zero. Specifically, the driving force limit amount is a driving force at which the following distance to the preceding vehicle (relative distance) at a time when the acceleration limiting time has passed from the start of the acceleration is equal to or larger than the reference relative distance and the relative vehicle speed to the preceding vehicle at the time when the acceleration limiting time has passed from the start of the acceleration is equal to or lower than the reference relative vehicle speed. The magnitudes of the following distance to the preceding vehicle during the follow-up travel, the acceleration limiting time, and the braking force are set to values used for the evaluation of the ASIL (Automotive Safety Integrity Level) as the safety standards specified in the functional safety standards ISO26262, for example. Further, the magnitude of the following distance during the follow-up travel is set based on the vehicle speed and is set to be larger when the vehicle speed is higher.

Next, the travel controller 5 calculates a target driving force after limit by adding the driving force limit amount to the reference target driving force (B124).

Then, the travel controller 5 compares a difference (B125) between the target driving force and the reference target driving force with the driving force limit amount (B126). The travel controller 5 sets the target driving force after limit as the driving force limit to avoid the collision with the preceding vehicle when the difference between the target driving force and the reference target driving force exceeds the driving force limit amount and, otherwise, sets the target driving force as the driving force limit (B127) because the collision with the preceding vehicle can be avoided without limiting the driving force.

By the above-described routine, a variation of the target driving force is limited such that the following distance at the timing T1 is such a distance that, when the braking force is generated from the timing T1, the relative acceleration to the preceding vehicle becomes zero before the distance to the preceding vehicle becomes zero.

Then, the travel controller 5 transmits the final target driving force to the engine controller 6A. The engine controller 6A controls the driving force based on the final target driving force. Thus, the vehicle can avoid the collision with the preceding vehicle.

Thus, even when the own vehicle accelerates because the camera cannot recognize the preceding vehicle although the preceding vehicle is present in fact during the follow-up travel at a constant speed, the driving force is limited in a range where the collision with the preceding vehicle or the like can be avoided when a driver performs the brake operation. Therefore, the driving force is not suppressed more than necessary and the acceleration performance is also improved.

The vehicle control according to the present invention is applicable not only to the follow-up travel at a constant speed but follow-up travel at a constant acceleration. In this case, when the target driving force is higher than the driving force required for the travel at a constant acceleration, the driving force variation is limited.

Further, in the above described routine, when the target driving force exceeds the R/L travel resistance driving force, the driving force limit is set as the final target driving force. However, it may be accepted that the target driving force is compared with the driving force limit, and then the lower is set as the final target driving force.

When the possibility of the collision is eliminated because a preceding vehicle also accelerates after the own vehicle has started accelerating or a preceding vehicle disappears by a lane change or the like, a driver does not perform the brake operation. In this case, after the timing T1, the acceleration increases as illustrated by the alternate long and short dashed lines in FIG. 2 and FIG. 3.

Next, modifications of this embodiment are described. The modifications described below are also included in the scope of this embodiment.

### (First modification)

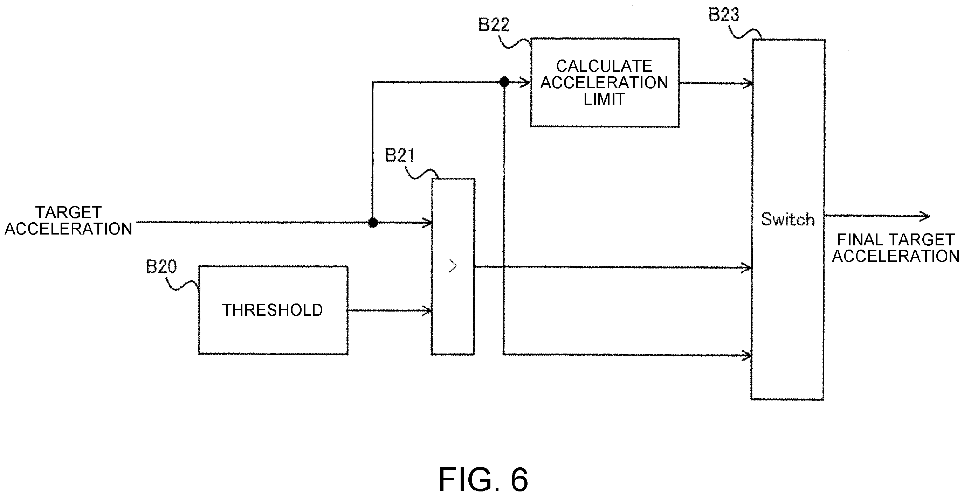

FIG. 6 is a diagram illustrating the contents of a control routine in a first modification. In this modification, the travel controller 5 reads a target acceleration. The target acceleration is preset as the acceleration in the follow-up travel or the autonomous driving. Further, the travel controller 5 stores the acceleration as a threshold used for the determination of whether the own vehicle has started accelerating (B20). The threshold herein is set to 0 G in a case of the follow-up travel at a constant vehicle speed and is set to a constant acceleration (for example, 0.1 G) in a case of the follow-up travel at the constant acceleration.

The travel controller 5 compares the target acceleration and the threshold of the acceleration (B21), and then, when the target acceleration is equal to or higher than the threshold, sets an acceleration limit (B22) in which an acceleration variation is limited as a final target acceleration, and, otherwise, sets the target acceleration as the final target acceleration as it is (B23). When the target acceleration is equal to or higher than the threshold, it can be determined that the vehicle has started accelerating.

A variation of the target acceleration is limited to realize the acceleration for the collision avoidance described above.

While the control routine of FIG. 4 limits the driving force to control the acceleration of the own vehicle, the control routine of FIG. 6 directly limits the acceleration. More specifically, the contents of processing of limiting the variation are configured to limit the acceleration in place of the driving force of FIG. 4, the processing which is substantially the same processing. To realize the target acceleration after limit, the driving force is controlled.

In this modification, the final target acceleration is calculated and the acceleration of the own vehicle is controlled based on the final target acceleration. Thus, the collision with a preceding vehicle can be avoided and the acceleration performance can be improved in the same manner as in the processing of FIG. 4.

### (Second modification)

This modification is different from the above-described embodiment in a control routine for calculating the final target driving force. The following description is given focusing on differences.

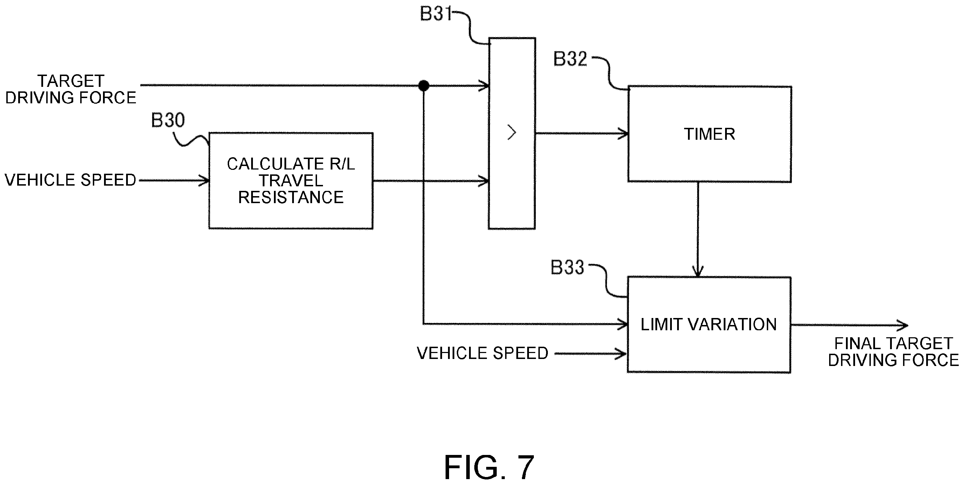

FIG. 7 is a diagram illustrating the contents of a control routine for calculating the final target driving force according to this modification. This routine is programmed in the travel controller 5.

This control routine is the same as the control routine of FIG. 4 until the travel controller 5 reads the target driving force and the vehicle speed, calculates the R/L travel resistance driving force based on the vehicle speed, and then compares the target driving force with the R/L travel resistance driving force (B30, B31). Further, processing of limiting the variation of the target driving force (B33) is also the same as that of the control routine of FIG. 4.

In this modification, when the target driving force exceeds the R/L travel resistance driving force, the travel controller 5 determines that a vehicle has started accelerating, and then starts counting by a timer (B32). More specifically, the timer starts the counting when the acceleration is started. The timer counts up to the timing T1 from the start of the acceleration. The travel controller 5 starts to limit the variation of the target driving force to the driving force limit amount described above (B33) with the start of the counting by the timer and continues the limit at least until the acceleration limiting time passes. The variation of the target driving force is limited to realize the acceleration for the collision avoidance described above. When the target driving force does not exceed the R/L travel resistance driving force, the target driving force is set as the target driving force after limit as it is (B33).

Hence, in this modification, the driving force until the acceleration limiting time passes is limited. Then, the collision with a preceding vehicle can be avoided and the acceleration performance can be improved in the same manner as in the processing of FIG. 4.

### (Third modification)

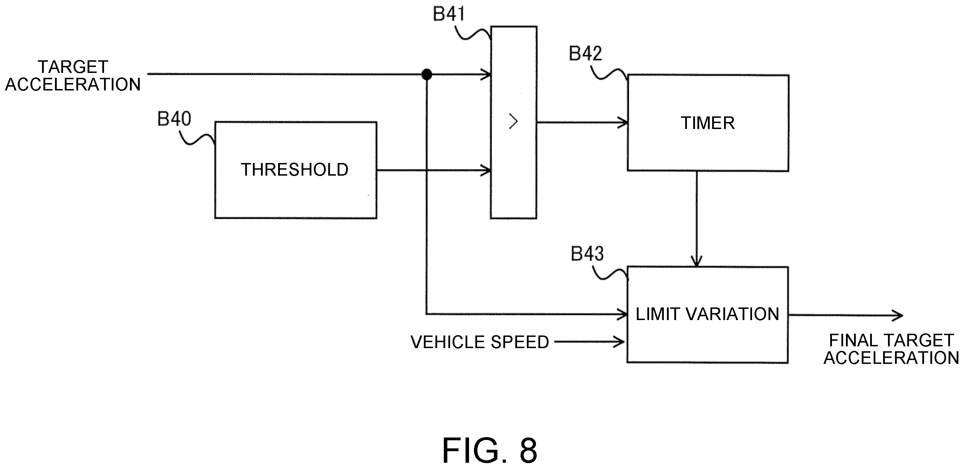

FIG. 8 is a diagram illustrating the contents of a control routine in a third modification. This routine is programmed in the travel controller 5. In this modification, the acceleration is directly limited as with the first modification to the control routine of FIG. 4 while the driving force is limited in the second modification illustrated in FIG. 7.

More specifically, the travel controller 5 reads the target acceleration and stores the acceleration as a threshold used for the determination of whether the own vehicle has started accelerating (B40). The travel controller 5 operates a timer when the target acceleration is equal to or higher than the threshold (B42). When the target acceleration is equal to or higher than the threshold, it can be determined that a vehicle has started accelerating. More specifically, the timer starts counting when the acceleration is started. The timer counts up to the timing T1 from the start of the acceleration. The travel controller 5 starts to limit the variation of the target acceleration to an acceleration limit amount (replacement for the above-described driving force limit amount by the acceleration) with the start of the counting by the timer and continues the limit at least until the acceleration limiting time passes (B23).

Thus, the collision with a preceding vehicle can be avoided and the acceleration performance can be improved in the same manner as in the processing of FIG. 4.

### (Fourth modification)

This modification is different from the above-described embodiment in a control routine for calculating the target driving force after limit. The following description is given focusing on differences.

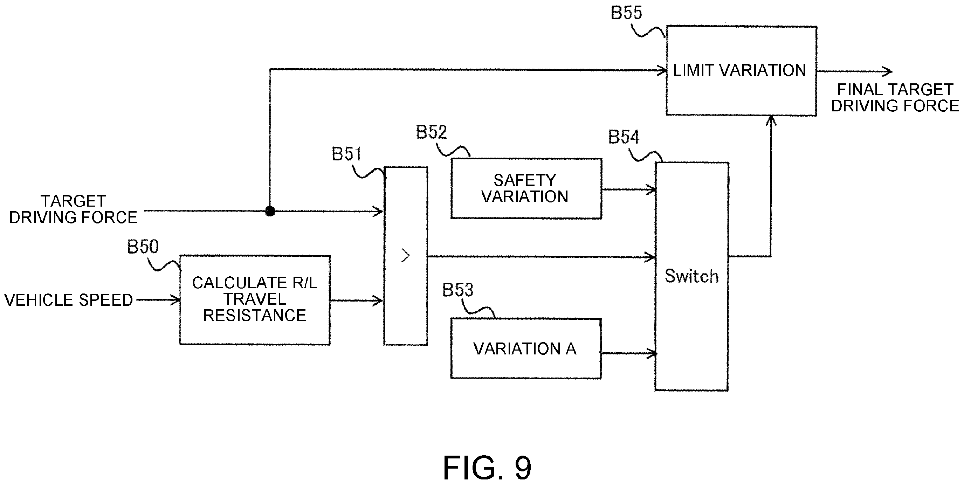

FIG. 9 is a diagram illustrating the contents of a control routine for calculating the target driving force after limit according to this modification. This routine is programmed in the travel controller 5.

This control routine is the same as the control routine of FIG. 4 until the travel controller 5 reads the target driving force and the vehicle speed, calculates the R/L travel resistance driving force based on the vehicle speed (B50), and then compares the target driving force with the R/L travel resistance driving force (B51).

In this modification, a safety variation and a variation A of the driving force are calculated (B52, B53). The safety variation is a variation at which, when there is a preceding vehicle, the collision with the preceding vehicle can be avoided and is calculated using, for example, the braking force specified in the functional safety standards ISO26262, a time until a brake pedal is stepped on after the necessity for braking is recognized, a delay time until the braking force is generated after the brake pedal is stepped on, and a relative distance/ a relative vehicle speed in the follow-up travel. The variation A is an arbitrarily set variation larger than the safety variation and is the variation of the target driving force used when there is no preceding vehicle, for example.

The travel controller 5 selects the safety variation when the target driving force is equal to or higher than the R/L travel resistance driving force, and, otherwise, selects the variation A (B54). Then, the travel controller 5 limits the variation of the target driving force with the selected variation as the upper limit and sets the target driving force limited in the variation as the final target driving force (B55).

Also, in this modification, the collision with a preceding vehicle can be avoided and the acceleration performance can be improved in the same manner as in the processing of FIG. 4.

### (Fifth modification)

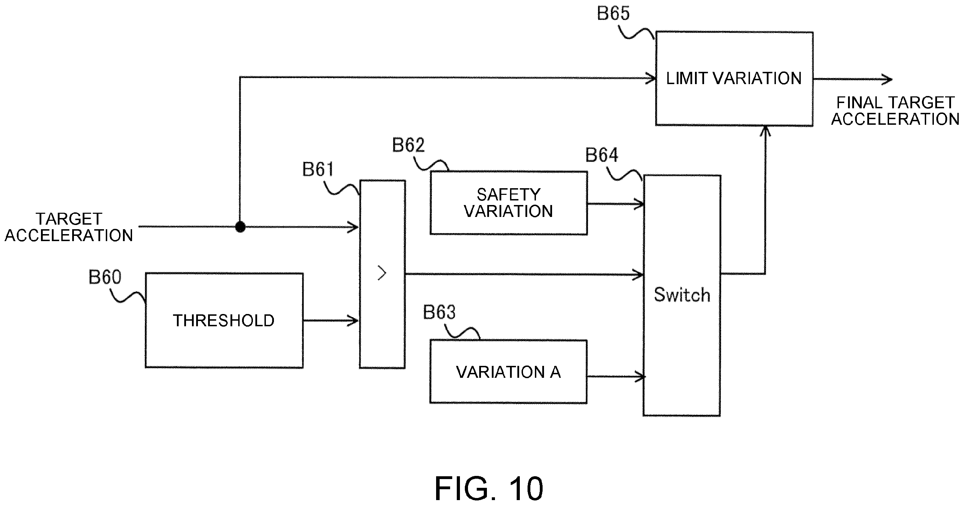

FIG. 10 is a diagram illustrating the contents of a control routine in a fifth modification. This routine is programmed in the travel controller 5. In this modification, the acceleration is directly limited as with the first modification to the control routine of FIG. 4 while the driving force is limited in the fourth modification illustrated in FIG. 9.

More specifically, the travel controller 5 reads the target acceleration and stores the acceleration as a threshold used for the determination of whether the own vehicle has started accelerating (B60). Then, the travel controller 5 compares the target acceleration with the threshold (B61). The travel controller 5 calculates the safety variation and the variation A of the acceleration (B62, B63). The travel controller 5 selects the safety variation when the target acceleration is equal to or higher than the threshold, and, otherwise, selects the variation A (B64). Then, the travel controller 5 limits the variation of the target acceleration with the selected variation as the upper limit and sets the target acceleration limited in the variation as the final target acceleration (B65).

Also, in this modification, the collision with a preceding vehicle can be avoided and the acceleration performance can be improved.

### (Sixth modification)

This modification is different from the above-described embodiment in a control routine for calculating the target driving force after limit. The following description is given focusing on differences.

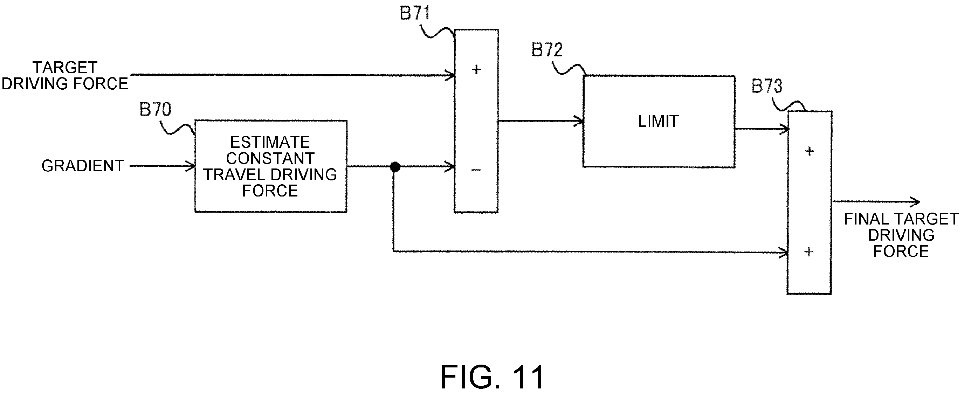

FIG. 11 is a diagram illustrating the contents of a control routine for calculating the target driving force after limit according to this modification. This routine is programmed in the travel controller 5.

The travel controller 5 reads the target driving force and the gradient of the road surface where the own vehicle is traveling. The road gradient is calculated based on a detection value of an acceleration sensor which is not illustrated, for example.

The travel controller 5 estimates the driving force required for travelling the road surface of the gradient at a constant vehicle speed (hereinafter also sometimes referred to as a "constant travel driving force") based on the read gradient and the weight of the own vehicle (B70), and then subtracts the constant travel driving force from the target driving force (B71). The weight of the own vehicle is obtained by adding a detection value of a weight sensor provided on a seat or the like to the weight of an empty vehicle stored in advance.

The travel controller 5 limits a driving force of a magnitude obtained by subtracting the constant travel driving force from the target driving force to the driving force limit amount described above (B72), and then sets a driving force of a magnitude obtained by adding the constant travel driving force to the driving force after limit as the final target driving force (B73).

The limiting of the driving force limits the target driving force not to exceed the upper limit of the driving force, which is set by a function with a time t as a parameter. The function with the time t as a parameter is a function represented by Driving force = at + b as in a change characteristic of the driving force from the timing zero to the timing T1 illustrated by the solid line in FIG. 2, for example. The upper limit of the driving force becomes lower with a reduction in a coefficient a and with a reduction in an initial value b.

In this modification, only the driving force excluding the driving force for traveling at a constant vehicle speed from the target driving force is limited as described above. Also, in this modification, the collision with a preceding vehicle can be avoided and the acceleration performance can be improved.

### (Seventh modification)

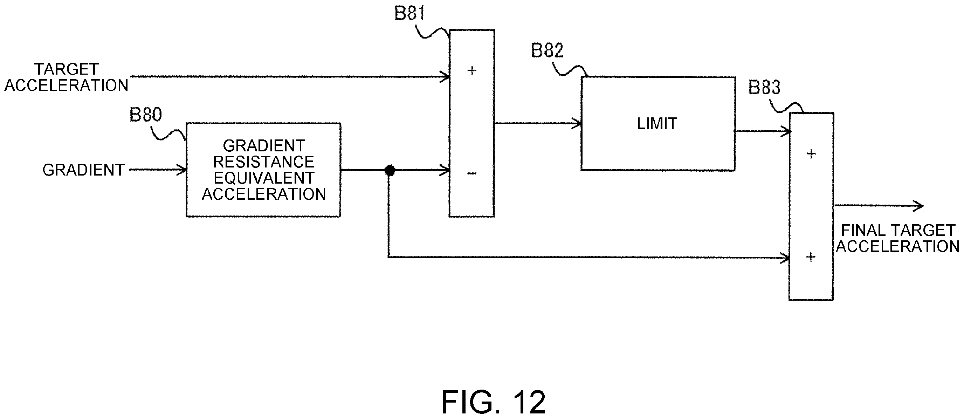

FIG. 12 is a diagram illustrating the contents of a control routine in a seventh modification. This routine is programmed in the travel controller 5. In this modification, the acceleration is directly limited as with the first modification to the control routine of FIG. 4 while the driving force is limited in the sixth modification illustrated in FIG. 11.

More specifically, the travel controller 5 estimates an acceleration (gradient resistance equivalent acceleration) generated by the gradient based on the read gradient and the weight of the own vehicle stored in advance (B80), and then subtracts the gradient resistance equivalent acceleration from the target acceleration (B81). The travel controller 5 limits an acceleration of a magnitude obtained by subtracting the gradient resistance equivalent acceleration from the target acceleration to the acceleration limit amount described above (B82), and then sets an acceleration of a magnitude obtained by adding the gradient resistance equivalent acceleration to the acceleration after limit as the final target acceleration (B83).

In this modification, only the acceleration excluding the acceleration to be offset by the gradient resistance from the target acceleration is limited. Also, in this modification, the collision with a preceding vehicle can be avoided and the acceleration performance can be improved.

### (Eighth modification)

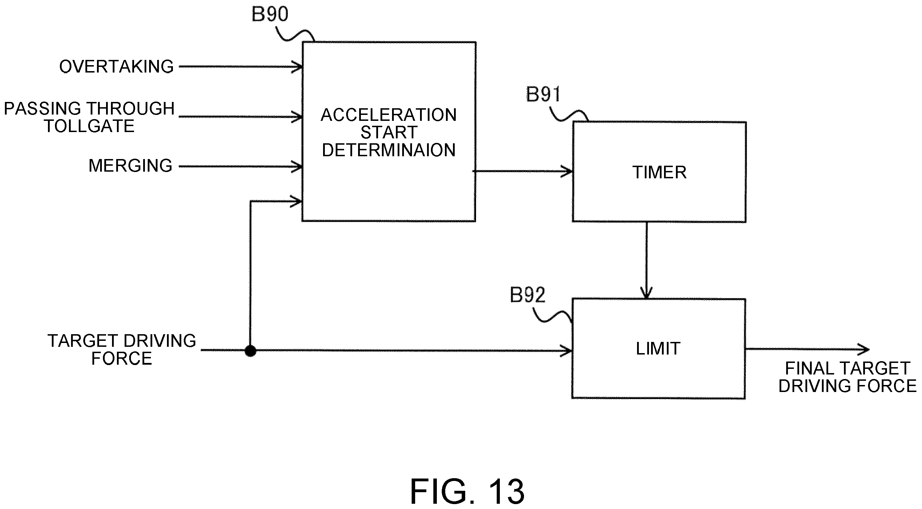

FIG. 13 is a diagram illustrating the contents of a control routine for calculating the target driving force after limit according to this modification. This routine is programmed in the travel controller 5.

This modification is different from the above-described modifications in a method for determining whether the own vehicle has started accelerating. Processing of operating the timer after determining that acceleration has been started (B91) is the same as that of the control routine illustrated in FIG. 7. Processing of limiting the target driving force (B92) is the same as that of the control routine illustrated in FIG. 11. The following description is given focusing on differences.

In this modification, the travel controller 5 performs an acceleration start determination based on the target driving force and information on whether the own vehicle accelerates (B90).

The information on whether the own vehicle accelerates is information on a determination result of an overtaking determination, information on whether the own vehicle passes through a tollgate, information on whether the own vehicle merges, and the like. The overtaking determination is a determination to overtake a vehicle traveling in front of the own vehicle performed by the travel controller 5 during traveling at a target vehicle speed by the autonomous driving, for example, in a case where the following distance to the vehicle is continuously reduced even when a radar as the outside recognition device 3 detects the vehicle and the vehicle speed of the own vehicle is reduced. After passing through a tollgate or when merging in junctions of highways and the like, the travel controller 5 accelerates the own vehicle. Then, the travel controller 5 operates the timer (B91) when recognizing that the own vehicle has passed through a tollgate or is merging based on map information and position information from a navigation system which is not illustrated.

An acceleration start determination based on the target driving force is a determination to start accelerating when the target driving force has increased, when the change rate in increasing the target driving force has exceeded a preset threshold, or the like, for example.

The travel controller 5 operates the timer when determining that the acceleration has been started by any of the above-described determination methods (B91).

Even when the start of the acceleration is determined as described in this modification, the collision with a preceding vehicle can be avoided and the acceleration performance can be improved as with the embodiment and the modifications described above.

### (Ninth modification)

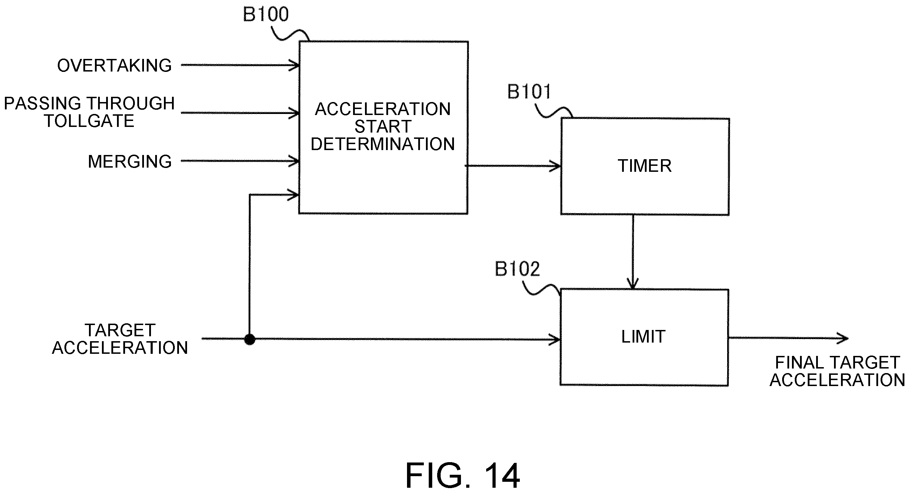

FIG. 14 is a diagram illustrating the contents of a control routine in a ninth modification. This routine is programmed in the travel controller 5. In this modification, the acceleration is directly limited as with the first modification to the control routine of FIG. 4 while the driving force is limited in the eighth modification illustrated in FIG. 13.

More specifically, the travel controller 5 performs the acceleration start determination based on the target acceleration and information on whether the own vehicle accelerates (B100), operates the timer when determining that the acceleration has been started (B101), and then limits the target acceleration (B102). Thus, the collision with a preceding vehicle can be avoided and the acceleration performance can be improved as with the embodiment and the modifications described above.

### (Tenth modification)

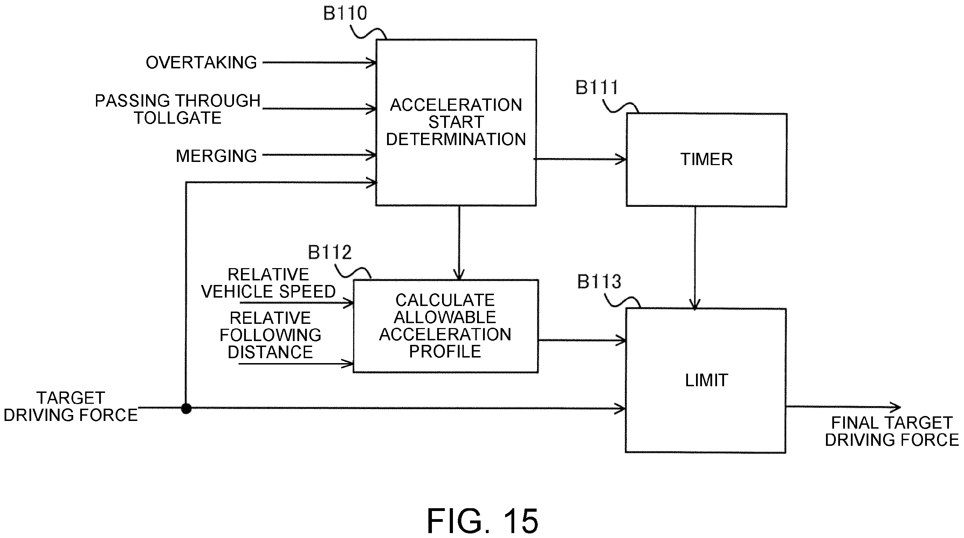

FIG. 15 is a diagram illustrating the contents of a control routine in a tenth modification. This routine is programmed in the travel controller 5. This modification is the same as the eighth modification in a point of operating the timer (Bill) when it is determined that acceleration has been started by the acceleration start determination (B110) and limiting the target driving force (B113) but is different from the eighth modification in a method for limiting the target driving force.

In this modification, an allowable acceleration profile is calculated based on a relative vehicle speed and a relative distance to a preceding vehicle detected by a radar (B 112), and then the upper limit of the target driving force is limited based on the allowable acceleration profile (B113). The allowable acceleration profile is a profile of the driving force for realizing an acceleration profile in which collision avoidance is achieved fundamentally similarly to the safety variation described in the fourth modification. However, while the relative vehicle speed and the relative distance to a preceding vehicle at the start of the acceleration used for the calculation of the safety variation are the values specified in the functional safety standards ISO26262, for example, the calculation of the allowable acceleration profile uses the actual relative vehicle speed and relative distance detected by the radar. Hence, in this modification, the driving force can be limited with higher accuracy.

### (Eleventh modification)

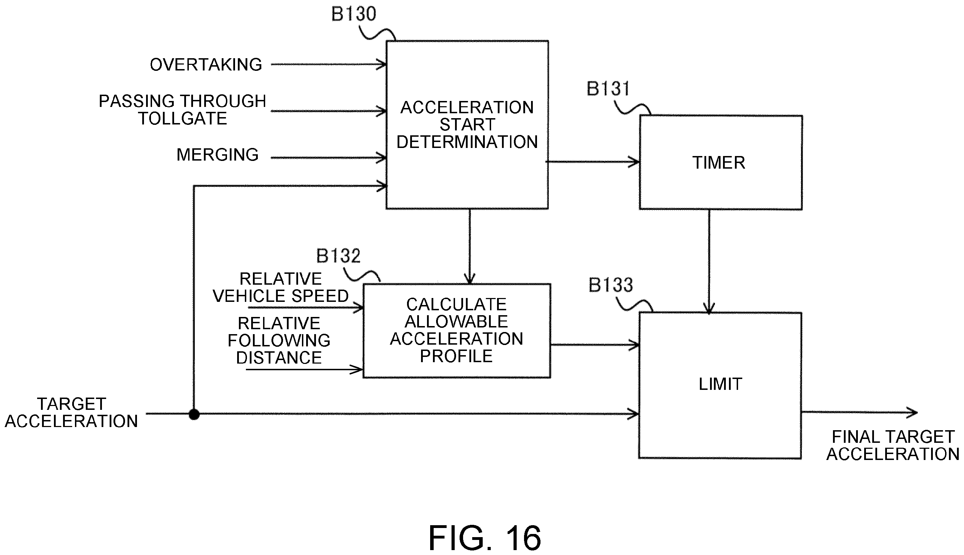

FIG. 16 is a diagram illustrating the contents of a control routine in an eleventh modification. This routine is programmed in the travel controller 5. In this modification, the acceleration is directly limited as with the first modification to the control routine of FIG. 4 while the driving force is limited in the eighth modification illustrated in FIG. 13.

More specifically, the travel controller 5 performs the acceleration start determination based on the target acceleration and information on whether the own vehicle accelerates (B130), and then operates the timer when determining that the acceleration has been started (B131). Further, the travel controller 5 produces the allowable acceleration profile based on the actual relative vehicle speed and relative distance when determining that the acceleration has been started (B132). The allowable acceleration profile in this modification is a characteristic of a change with time of the acceleration at which collision avoidance is achieved. Then, the travel controller 5 limits the target acceleration based on the allowable acceleration profile (B133). In this modification, the driving force can also be limited with higher accuracy.

Although the embodiment and the modifications described above describe the case where the follow-up travel is performed by the autonomous driving, the same applies also to a case where the follow-up travel is performed by a drive support control, such as a so-called cruise control. Further, the embodiment and the modifications described above describe the case where a driver steps on the brake pedal after the start of acceleration, but the present invention is not limited thereto. For example, the present invention is applicable also to a system having a function that the travel controller 5 performs a brake operation when a preceding vehicle or an obstacle is detected by a radar after the start of acceleration as a backup for a case where a camera cannot recognize a preceding vehicle and the like.

This embodiment described above provides the vehicle control method including: setting the target acceleration based on the distance to a preceding vehicle or an obstacle, and then accelerating the own vehicle based on the target acceleration without relying on a driver's operation. According to this vehicle control method, the own vehicle is accelerated at the acceleration limit in which the target acceleration is suppressed until at least the preset acceleration limiting time has passed from the start of the acceleration. Thus, the magnitude of the acceleration can be suppressed to a magnitude at which the collision with a preceding vehicle can be avoided when a driver performs the brake operation after the start of the acceleration. Further, also a case where a driver does not perform the brake operation for a reason that the preceding vehicle is also accelerated, for example, can be assumed. However, this embodiment and the like can cancel the suppression of the target acceleration after the lapse of the acceleration limiting time, and therefore can achieve both the securing of safety and the acceleration performance.

In this embodiment, the acceleration limiting time is the sum of a time until the determination to apply braking and a time until the braking force is actually generated from starting a braking operation. Although it is inevitable to take a time until the generation of the braking force after the determination to apply braking, the collision with a preceding vehicle can be avoided by setting the acceleration limiting time as described above.

In this embodiment, the acceleration limit is an acceleration at which the distance to a preceding vehicle or an obstacle at the time when the acceleration limiting time has passed from the start of the acceleration is such a distance that, when the braking force is generated from the time when the acceleration limiting time has passed, the relative acceleration to the preceding vehicle or the obstacle becomes zero before the distance to the preceding vehicle or the obstacle becomes zero. Thus, the collision with the preceding vehicle can be avoided without suppressing the target acceleration more than necessary.

As described in this embodiment, it may be acceptable that the target driving force for realizing the target acceleration is calculated, and then the target acceleration is suppressed by suppressing the target driving force. In order to suppress the acceleration, the driving force is controlled, and therefore an operation load can be reduced by directly controlling the driving force.

As described above, the embodiment of the present invention is described. However, the above-described embodiment merely exemplifies some of application examples of the present invention and does not intend to limit the technical scope of the present invention to the specific configurations of the embodiment described above.

## Claims

1. A vehicle control method including: setting a target acceleration based on a distance to a preceding vehicle or an obstacle and accelerating an own vehicle based on the target acceleration without relying on a driver's operation, the vehicle control method comprising:
calculating an acceleration limit which is an acceleration at which a relative distance to the preceding vehicle or the obstacle at a time when a preset acceleration limiting time has passed from a start of the acceleration is equal to or longer than a reference relative distance and a relative vehicle speed to the preceding vehicle or the obstacle at the time when the preset acceleration limiting time has passed from the start of the acceleration is equal to or lower than a reference relative vehicle speed, and
accelerating the own vehicle at the acceleration limit when the target acceleration exceeds the acceleration limit.

2. The vehicle control method according to Claim 1, wherein
the reference relative vehicle speed is lowered when the reference relative distance is smaller.

3. The vehicle control method according to Claim 1 or 2, wherein
the acceleration limiting time is a sum of a time required until a driver steps on a brake pedal after the start of the acceleration and a delay time until a braking force is generated after the brake pedal is stepped on.

4. The vehicle control method according to any one of Claims 1 to 3, wherein
the acceleration limit is an acceleration at which the relative distance to the preceding vehicle or the obstacle at the time when the acceleration limiting time has passed from the start of the acceleration is such a relative distance that, when the braking force is generated from the time when the acceleration limiting time has passed, the relative vehicle speed to the preceding vehicle or the obstacle becomes zero before the relative distance to the preceding vehicle or the obstacle becomes zero.

5. The vehicle control method according to any one of Claims 1 to 4, wherein
the acceleration limit is an acceleration at which the relative vehicle speed to the preceding vehicle or the obstacle at the time when the acceleration limiting time has passed from the start of the acceleration is such a relative vehicle speed that, when the braking force is generated from the time when the acceleration limiting time has passed, the relative vehicle speed to the preceding vehicle or the obstacle becomes zero before the relative distance to the preceding vehicle or the obstacle becomes zero.

6. The vehicle control method according to any one of Claims 1 to 5, comprising:
calculating a target driving force for realizing the target acceleration and the acceleration limit.

7. A vehicle control device includes a travel control unit configured to set a target acceleration based on a distance to a preceding vehicle or an obstacle and accelerate an own vehicle based on the target acceleration without relying on a driver's operation, the vehicle control device comprising:
the travel control unit being programmed
to calculate an acceleration limit which is an acceleration at which a relative distance to the preceding vehicle or the obstacle at a time when a preset acceleration limiting time has passed from a start of the acceleration is equal to or longer than a reference relative distance and a relative vehicle speed to the preceding vehicle or the obstacle at the time when the preset acceleration limiting time has passed from the start of the acceleration is equal to or lower than a reference relative vehicle speed, and
to accelerate the own vehicle at the acceleration limit when the target acceleration exceeds the acceleration limit.
